# DEMANDE DE BREVET EUROPEEN

(11) **EP 0 537 048 A1**
(43) Date de publication de la demande: **14.04.1993**
(21) Numéro de dépôt: 92402660.2
(22) Date de dépôt: 29.09.1992
(51) Int. Cl.: G01S 3/786

(54) **Détecteur infrarouge à haute sensibilité et caméra infrarouge utilisant un tel détecteur**

(30) Priorité: 08.10.1991 FR 9112351
(71) Demandeur: THOMSON-CSF, 75008 Paris (FR)
(72) Inventeur: Blondel, Philippe, Thomson-CSF, F-92045 Paris La Défense (FR); Bertrand, Francis, Thomson-CSF, F-92045 Paris La Défense (FR)
(74) Mandataire: Lincot, Georges

(57) **Abrégé**

Le détecteur infrarouge à haute sensibilité selon l'invention possède des moyens de cumul de valeurs de luminance associées aux flux reçus par les cellules photosensibles de la matrice de détection (20) du détecteur, successivement lues par un circuit de lecture CCD (31) à la cadence de trame puis converties par un convertisseur CAN(36), et des moyens de sélection (38) des cumuls effectués en fonction des caractéristiques de balayage du détecteur. Les moyens de cumul se présentent sous la forme d'un intégrateur (39) comportant, d'une part, un multiplieur (390) couplée à une mémoire de jeux de coefficients (34) à deux valeurs, chaque valeur indiquant un type de cumul, avec ou sans décalage d'une cellule, et, d'autre part, un accumulateur (35, 391) pour sommer les valeurs de luminance selon la séquence de cumuls définie. Des moyens de balayage (30) fournissent les données relatives aux caractéristiques de balayage, aux moyens de sélection (38) du détecteur, afin de sélectionner, un jeu de coefficients dans la mémoire (34).

Application à la recherche et à la poursuite de cible.

## Description

L'invention concerne le domaine de l'acquisition de cible, par recherche d'une cible puis poursuite de la cible repérée à l'aide d'une imagerie infrarouge et a pour objet, plus précisément, un détecteur infrarouge haute sensibilité et une caméra infrarouge utilisant un tel détecteur pour effectuer notamment une mission d'acquisition de cible.

Les caméras infrarouges comportent classiquement un détecteur ayant la forme d'une barrette ou d'une mosaïque de cellules photosensibles disposées respectivement selon un nombre réduit de ligne ou selon une matrice de lignes et de colonnes. Ce détecteur, disposé dans le plan froid d'un cryostat, analyse une image de la scène observée formée par un objectif. Un système opto-mécanique assure le balayage de cette image sur le détecteur afin de délivrer un signal proportionnel au flux lumineux provenant de la scène observée. On peut citer, par exemple, la barrette 288 x 4 pixels et la matrice 32 x 32 pixels développées par la Société SOFRADIR. Ces caméras délivrent un signal vidéo par conversion, entre deux lectures, des charges intégrées dans des puits de stockage proportionnellement au flux reçu par chacun des pixels. Le traitement de la conversion est effectué à travers des dispositifs électroniques du type à transfert de charges connus sous les initiales CCD ("Charged Coupled Device" en dénomination anglosaxonne). Ces dispositifs, commandés par un circuit d'adressage, permettent d'accéder sélectivement aux puits de stockage et assurent un multiplexage des charges stockées pour former le signal vidéo.

Des détecteurs de forme matricielle à nombre de cellules nettement plus élevé ont été plus récemment développés. Ces détecteurs analysent directement l'image sans nécessiter de système de balayage, et constituent alors de véritables rétines à balayage électronique. Une rétine électronique de 128 x 128 pixels a, par exemple, été réalisée par la Société LIR.

En règle générale, les caméras infrarouges sont utilisées dans des auto-directeurs pouvant fonctionner, suivant la phase de la mission, en mode de recherche de cibles et en mode de poursuite de cibles.

En mode recherche, la caméra doit scruter tout ou partie de l'espace environnant accessible. Cette caméra doit donc être associée à un système opto-mécanique scrutateur situé à l'entrée de l'autodirecteur, par exemple un miroir de veille panoramique, à axe de visée variable. Le contenu de la scène peut alors varier rapidement au cours du temps.

En mode poursuite, une fols la cible "accrochée" ou repérée, l'axe de visée varie très peu puisque des moyens de traitement d'image permettent un asservissement de l'axe de visée en direction de la cible. Le contenu de la scène observée se modifie alors peu au cours de cette deuxième phase.

L'obtention d'une bonne sensibilité est par ailleurs indispensable pour exploiter correctement le signal fourni quel que soit le mode d'utilisation de la caméra. En effet, la composante continue du signal, correspondant au fond de scène, représente une partie très importante du signal par rapport à la partie due à la composante variable, représentant l'information utile. Par exemple, dans les fenêtres spectrales classiques en infrarouge, 3-5 µm et 8-12 µm, un écart de température d'un degré de la scène par rapport au fond ne provoque qu'une variation de 1 % du signal vidéo par rapport à la composante continue.

D'une manière générale, l'amélioration de la sensibilité passe par l'augmentation du niveau du signal détecté pour chaque surface élémentaire de l'image de la scène observée, encore appelée élément d'image ou pixel.

Une solution consiste à augmenter le temps d'intégration des charges dans les puits de stockage, mais la saturation de ces puits limite sensiblement l'efficacité de cette méthode.

Une autre solution est d'augmenter le nombre de cellules photosensibles associées à un même élément d'image. On sait en effet que la sensibilité d'un détecteur est proportionnelle à la racine carrée du nombre de cellules photosensibles associées pour former un même élément d'image. Mais la résolution de l'image s'en trouve rapidement affaiblie.

Ces deux méthodes générales offrent donc des possibilités d'amélioration de la sensibilité très limitées.

Classiquement, pour chaque mode d'utilisation des caméras infrarouges, une technique spécifique a donc été développée afin d'augmenter encore la sensibilité de ces détecteurs ; cette amélioration est obtenue en suivant chaque élément d'image ou pixel, dans le temps de façon à accumuler les charges successivement intégrées pour un même pixel.

En mode de recherche de cibles, l'image évoluant rapidement dans le temps, la technique d'amélioration de sensibilité adaptée utilise la fonction d'intégration avec retard, dénommée TDI (initiales de "Time Delay Integration" en terminologie anglosaxonne). Le TDI consiste à additionner les charges stockées successivement par les différentes cellules photosensibles élémentaires qui captent, à des instants différents, le flux lumineux correspondant à un même point de la scène observée. Le traitement peut s'effectuer soit au niveau du détecteur proprement dit (il est alors appelé TDI interne), soit à l'extérieur du détecteur (TDI externe) grâce à un opérateur numérique et une mémoire dédiés à cette fonction. Le TDI ne peut s'appliquer qu'aux détecteurs à balayage dont des cellules photosensibles différentes "voient" à des instants successifs le même point de la scène et ne peut donc convenir aux rétines électroniques ou aux détecteurs matriciels utilisés de manière fixe.

En mode de poursuite de cibles, l'amélioration de sensibilité est obtenue par la technique dite de post-intégration. Cette technique utilise le fait que, la scène observée n'évoluant pratiquement pas dans le temps, une même cellule élémentaire voit un même point d'image à des instants différents. La post-intégration consiste alors à faire la somme, pixel à pixel, de n intégrations de charges successives correspondant à n images successives. Pour un même élément d'image le temps d'intégration équivalent des charges stockées est ainsi augmenté sans saturer les puits de stockage. La mise en oeuvre de cette fonction nécessite l'utilisation, après numérisation, d'une mémoire d'image et d'un opérateur spécialisé. La post-intégration concerne uniquement les rétines détectrices ou éventuellement des détecteurs utilisés uniquement de manière fixe, c'est-à-dire sans balayage.

Ainsi les détecteurs précédemment décrits ne fournissent un signal amélioré en sensibilité que pour un des mode de fonctionnement d'un autodirecteur à l'exclusion de l'autre : les détecteurs balayés en mode de recherche de cibles et les détecteurs fixes en mode de poursuite de cibles.

Le problème est de pouvoir disposer d'un signal qui reste à haute sensibilité pour l'ensemble des deux phases principales successives d'une même mission classique d'acquisition de cible, à savoir en phase de recherche puis, après accrochage sur une cible repérée, en phase de poursuite de cette cible.

Pour résoudre ce problème, l'invention repose sur une utilisation combinée des techniques antérieures de TDI et de post-intégration à travers une détection infrarouge de type à balayage, la détection étant effectuée à partir d'une barrette ou d'une mosaïque de détection.

Plus précisément, le détecteur infrarouge à haute sensibilité selon l'invention, comportant une matrice de cellules photosensibles élémentaires des moyens de formation d'un signal vidéo à partir d'un multiplexage par un circuit de lecture CCD des signaux de luminance fournis successivement par les cellules proportionnellement au flux lumineux provenant de chacun des pixels d'une image de la scène observée et reçu par chacune des cellules correspondantes du détecteur au cours d'un balayage périodique du détecteur sur l'image de la scène commandé par des moyens de balayage, et des moyens de conversion du signal vidéo en valeurs de luminances numériques correspondant aux signaux fournis par les cellules photosensibles, le détecteur étant caractérisé en ce qu'il comporte
- des moyens de cumul lors de lectures de trames successives des valeurs de luminance fournies, pour cumuler la valeur de luminance fournie par chacune des cellules du détecteur lors de la lecture d'une trame soit à une valeur de luminance fournie sans décalage par la même cellule soit à celle fournie, avec décalage, par une cellule adjacente couvrant partiellement le même pixel, lors de la lecture de la trame suivante ;
- et des moyens de sélection pour sélectionner au cours du temps et suivant des données relatives aux caractéristiques de balayage du détecteur, le type des cumuls successifs à effectuer, soit avec soit sans décalage de cellule, et le nombre de cumuls sous forme de séquences.

L'invention, qui peut s'adapter à tout mode de balayage de détecteurs, linéaire, circulaire ou en spirale, concerne également une caméra infrarouge utilisant un tel détecteur afin de fournir un signal à haute sensibilité, en particulier pendant toute la durée d'une mission complète d'acquisition de cible.

L'invention sera mieux comprise et d'autres caractéristiques et avantages apparaîtront à l'aide de la description qui suit, en référence aux figures annexées qui représentent respectivement :
- la figure 1 et, respectivement 2, une illustration de la mise en oeuvre selon l'art antérieur de circuits à fonction d'intégration avec retard TDI interne, respectivement à TDI externe ;
- la figure 3, un décalage de trame de moins d'un pixel ;
- la figure 4, une illustration de la mise en oeuvre d'un détecteur infrarouge en mode de balayage circulaire ;
- la figure 5, le schéma d'un exemple de réalisation du circuit électronique d'une caméra utilisant un détecteur selon l'invention.

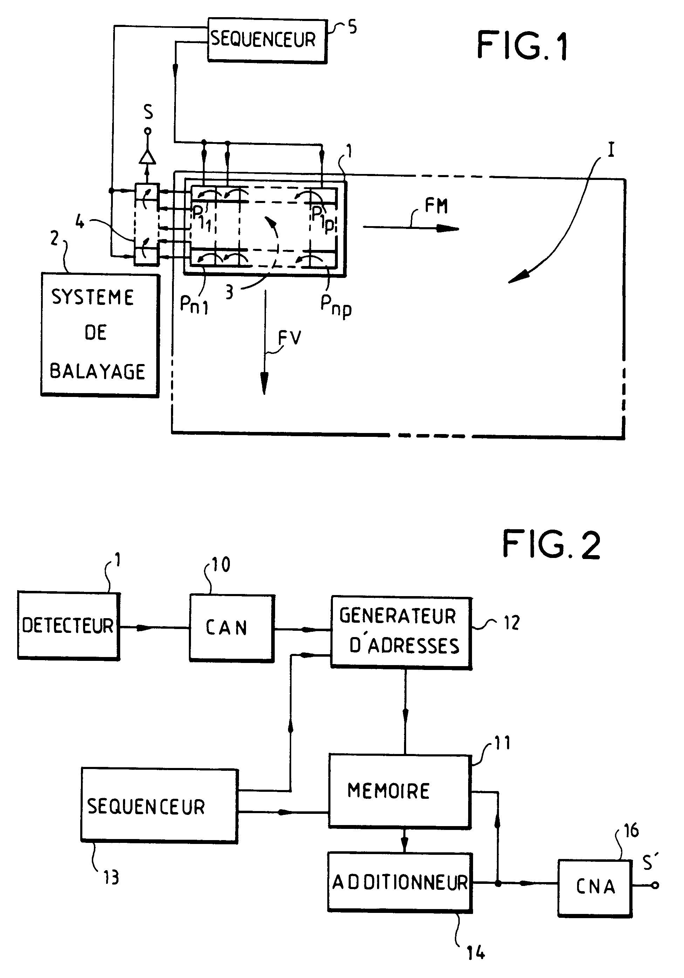

La figure 1 représente un schéma illustrant un exemple de mise en oeuvre d'un circuit à fonction TDI interne selon l'art antérieur.

Un détecteur 1 balaye une image I de la scène observée, à l'aide d'un système opto-mécanique de balayage 2. Le balayage est classiquement de type série-parallèle, composé d'un balayage horizontal à vitesse rapide, selon la flèche FH, et d'un balayage vertical, à vitesse lente, selon la flèche FV. Les balayages sont commandés par des tensions variant selon des rampes en dents de scie.

Classiquement, le détecteur infrarouge 1 comporte des cellules photosensibles élémentaires, appelées Pij, disposées selon n lignes et p colonnes, i et j variant respectivement de 1 à n et de 1 à p. Sur la figure, ont été référencées les cellules P11, P1p, Pn1 et Pnp du détecteur 1.

Dans le traitement TDI Interne, les charges successivement intégrées dans des puits de stockage (non représentés) des cellules sont transférées, par cumul successif de cellule en cellule voisine de la même ligne via un circuit de transfert de charges 3, en abrégé CCD, intégré à l'arrière du détecteur 1, vers un circuit à décalage 4. Dans le circuit 4, composé de zones de stockage alignées selon une colonne, les charges cumulées horizontalement sont lues verticalement par transfert successif d'une zone du circuit 4 à la zone adjacente.

Un séquenceur 5 synchronise le balayage du détecteur effectué par le système 2, le cumul successif des charges d'une cellule à l'autre via le circuit de transfert 2, et la lecture par le circuit à décalage 4, par harmonisation des tensions de balayage et des tensions de transfert appliquées aux puits de stockage du CCD3 et aux zones du circuit à décalage 4. Ainsi la fréquence de passage des charges d'une cellule à l'autre est réglée par le séquenceur 5 de telle sorte qu'elles sont cumulées et lues à la vitesse rapide du balayage linéaire horizontal du détecteur. En sortie du circuit 4, le signal vidéo est amplifié à travers un amplificateur 6 puis délivré à une borne S.

Lorsque le nombre de colonnes de pixels du détecteur 1 est réduit, par exemple 4 dans la barrette de 288 x 4 cellules de SOFRADIR, le TDI s'effectue directement, sans nécessiter l'adjonction d'un circuit de traitement externe.

Mais, pour un détecteur de forme matricielle ayant un nombre plus important de colonnes , le nombre de cellules participant à une même accumulation de charges est limité par la linéarité du balayage et les mouvements angulaires de la ligne de visée. En effet, si ce nombre est trop élevé, les charges additionnées ne correspondent plus exactement au même point d'image du fait de la non-linéarité de balayage et des décalages angulaires. Un nombre de cellules associées compris entre 8 et 12 est un compromis acceptable permettant une amélioration substantielle du rapport signal sur bruit, avec un gain de l'ordre de 3, sans entraîner une dégradation trop importante de la qualité de l'image.

Lorsque le détecteur comporte un tel nombre de colonnes de cellules, c'est-à-dire entre 8 et 12 ou un nombre supérieur à cette fourchette de valeurs, il est alors nécessaire de mettre en oeuvre un circuit TDI externe à traitement numérique. Un tel circuit, représenté sur la figure 2, comporte un convertisseur analogique-numérique CAN 10 pour recevoir un signal vidéo analogique fourni par un détecteur classique, tel que le détecteur 1, et pour échantillonner ce signal en valeurs numériques de luminance correspondant aux flux lumineux reçus respectivement par les cellules du détecteur. Les valeurs numériques de luminance d'une même trame sont ensuite stockées dans une mémoire d'image 11 via un générateur d'adresse 12, qui répartit ces valeurs dans la mémoire 11 en fonction de la localisation des cellules sur l'image de la scène observée à l'instant où elles reçoivent le flux lumineux correspondant. Un séquenceur 13 définit la cadence d'adressage en fonction de la vitesse de balayage de façon à ce que chaque valeur de luminance mémorisée corresponde au flux reçu par chacune des cellules du détecteur 1 pendant une même durée déterminée.

Le TDI externe consiste alors à accumuler les valeurs de luminance d'une trame avec celles de la trame suivante, les trames étant successivement mémorisées et lues au rythme défini par le séquenceur 13 avec "un décalage d'un pixel", c'est-à-dire entre la valeur de luminance d'une première trame provenant d'une cellule donnée et la valeur de luminance provenant de la cellule voisine ayant intégré, à la trame suivante et du fait du déplacement du détecteur d'une distance adaptée, le flux lumineux provenant d'un même point de la scène. Pour ce faire, il est nécessaire que le détecteur se soit déplacé, entre deux lectures, d'une distance égale à celle séparant les centres de deux cellules adjacentes correspondant à un décalage d'un pixel.

Le cumul est réalisé sur un nombre prédéterminé de trames successives, par exemple de 8 à 12, ces trames cumulées étant dites également "décalées d'un pixel". Le cumul est effectué à travers un accumulateur à boucle constitué par la mémoire 11 associée à un additionneur 14. A la borne de sortie du circuit TDI externe, un signal vidéo analogique S′ est obtenu après conversion analogique grâce à un convertisseur numérique analogique CNA 16.

Dans le cas du circuit TDI externe, qui vient d'être décrit, la vitesse de balayage impose donc nécessairement un déplacement du détecteur d'une distance égale à celle séparant les centres de deux cellules appelé précédemment décalage d'un pixel entre chaque lecture de trame du détecteur. Par exemple, pour une résolution d'image de 1 mrad par pixel et pour une cadence de lecture de 1 ms, la vitesse de balayage nominale est de 1 rad/s.

Selon l'invention, la vitesse de balayage, est choisie non égale, par exemple inférieure, à la valeur nominale nécessaire au TDI externe, pour créer de nouvelles trames. Les valeurs numériques de luminance peuvent alors être cumulées avec ou sans décalage selon des combinaisons adaptées aux différents types de balayage possibles : linéaire, circulaire ou en spirale. Le nombre de trames à cumuler et le type des cumuls successifs, c'est-à-dire avec ou sans décalage, est fonction des conditions dans lesquelles le balayage est effectué, en particulier du type d'évolution de la scène observée suivant le mode d'utilisation du détecteur et du type de balayage utilisé.

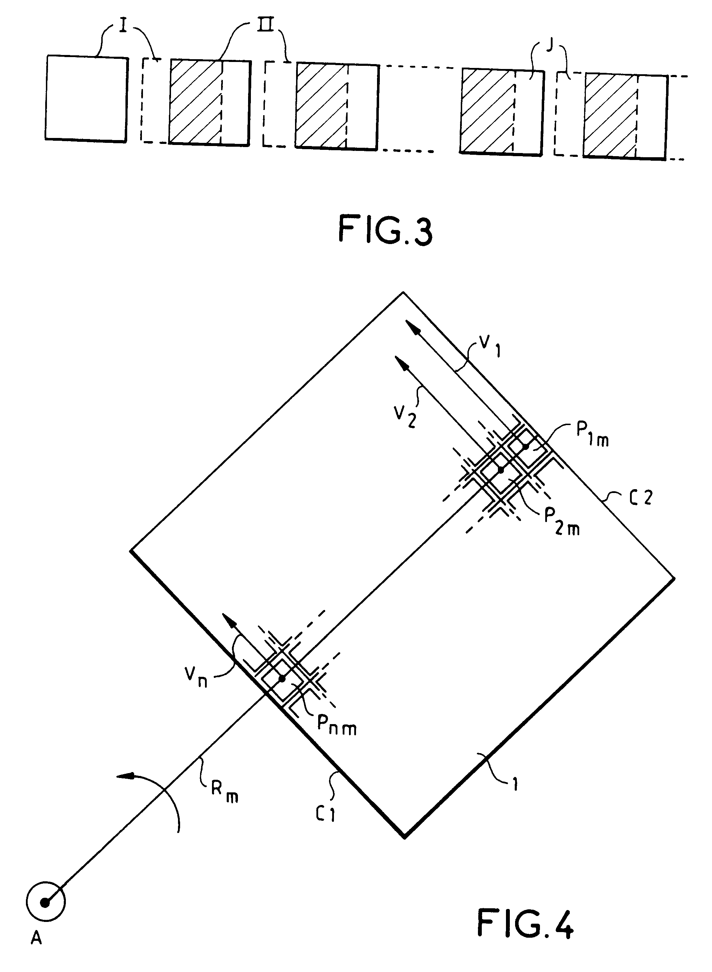

Lorsque la vitesse n'est plus nominale, un cumul avec ou sans décalage d'une cellule ne coïncide plus avec les cumuls avec ou sans décalage d'un pixel des techniques précédentes. En effet, les cellules correspondant aux valeurs de luminance cumulées sont alors celles qui ont intégré, du fait que la vitesse de balayage n'est plus nominale , des flux lumineux qui ne proviennent plus exactement d'un même point de l'image ; le cumul est alors effectué avec ou sans décalage d'une cellule de façon que les surfaces couvertes par les cellules correspondantes recouvrent au moins partiellement la surface d'un même pixel. La figure 3 illustre un tel recouvrement partiel des cellules d'une ligne d'une matrice photosensible pour un décalage de trame de moins d'un pixel. Les cellules I, II,..., N, schématisées par un contour en traits pleins, sont celles d'une première trame, les mêmes cellules apparaissant en traits pointillés pour la trame suivante décalée de moins d'un pixel. Les surfaces communes sont hachurées.

Ainsi, une vitesse de balayage égale à une fraction, 1/k, de la vitesse nominale précédemment définie, entraîne la création de k-1 trames intermédiaires entre deux trames primaires décalées d'un pixel, la seconde de ces trames primaires devenant la k+1^{ième} trame. Il est possible d'effectuer k-1 cumuls supplémentaires de valeurs de luminance sans décalage de pixel pour un certain nombre de premières trames intermédiaires successivement lues, et avec un même décalage d'une unité, par rapport à la première trame, pour le reste des trames intermédiaires.

Les cumuls effectués avec décalage correspondent aux sommations de trames effectuées, dans un traitement de type TDI externe, avec des détecteurs balayés, et les cumuls sans décalage sont assimilables aux sommations de trames effectuées dans un traitement du type post-intégration, appliqué classiquement aux détecteurs non balayés ou aux rétines.

Le nombre et le type des cumuls successifs, avec ou sans décalage, restent à déterminer mais, précisément, le fait de pouvoir en varier le nombre et de pouvoir choisir la fréquence des cumuls avec ou sans décalage assure une grande souplesse d'adaptation aux conditions et au type de balayage que ne pourraient pas procurer ni la technique du TDI, ni la technique de la post-intégration, prises séparément ou successivement.

Une augmentation du nombre des valeurs numériques cumulées, avec et sans décalage, est donc permise systématiquement, c'est-à-dire en tenant compte de toutes les trames même des trames non décalées exactement d'un pixel. Cette augmentation correspond à une augmentation du nombre de pixels participant à la formation de chacune de ces valeurs cumulées. Ainsi la sensibilité du signal délivré, proportionnelle à la racine carrée du nombre de pixels concernés, s'en trouve augmentée.

En reprenant l'exemple numérique illustrant le circuit TDI externe, une vitesse de balayage de 0,5 rads, qui conduit à un décalage d'un pixel toutes les deux trames, crée une seule trame intermédiaire. Le nombre de valeurs cumulées étant doublé, la sensibilité du signal est multipliée par 2. Les cumuls des valeurs successivement mémorisées peuvent alors se faire selon le schéma d'accumulation suivant :
- cumul avec décalage d'un pixel des trames 1 et 2 ;
- cumul, sans décalage de pixels de la trame 3
- cumul avec décalage d'un pixel de la trame 4 ;
- cumul sans décalage de la trame 5 ; etc...

Un tel schéma d'accumulation peut être noté par commodité : 1010101..., en désignant par 0 un cumul sans décalage de pixel et par 1 un cumul avec un décalage d'un pixel.

Pour des raisons structurelles, du fait de l'encombrement du système opto-mécanique de balayage, il est parfois difficile de mettre en oeuvre un balayage de type linéaire. Par exemple, avec une structure de stabilisation de l'auto- directeur de type site-roulis, un balayage circulaire ou en spirale de l'image est préférable. La mise en oeuvre de ce type de balayage est connue de l'Homme de l'Art et ne sera pas décrite dans le cadre de l'invention. Rappelons seulement qu'elle nécessite l'utilisation d'un dérotateur optique ou d'un traitement électronique afin de redresser l'image parallèlement aux lignes du détecteur.

Un balayage circulaire ou en spirale assure la mise en rotation, illustrée sur la figure 4, du détecteur 1 autour d'un axe de rotation A. Un rayon médian mobile Rₘ est déflni comme partant de la trace de l'axe A dans le plan de la figure et passant par le milieu des côtés opposés C1 et C2 du détecteur 1, de telle sorte qu'il y ait autant de pixels à gauche et à droite du rayon Rₘ. Par exemple, le rayon Rₘ partage un détecteur matriciel de 32 x 32 pixels en deux demi-détecteurs identiques de 16 x 32 pixels. Le rayon Rₘ est de longueur constante dans un balayage circulaire et de longueur périodiquement variable dans un balayage en spirale.

Les vecteurs vitesses linéaires V1, V2, ..., Vn des cellules médianes P₁ₘ, P₂ₘ, ..., Pₙₘ des lignes 1, 2, ..., n du détecteur 1 sont également représentés sur la figure 3. On sait que la vitesse linéaire de balayage varie proportionnellement à la distance à l'axe A. SI, par exemple, la distance AP1m est égale ou double de la distance APnm, et si le déplacement du détecteur est d'un pixel par lecture de trame au niveau de la première ligne, et donc de P1m, le déplacement du détecteur correspond alors à 1/2 pixel par lecture de trame au niveau de la nième ligne du détecteur, et donc de Pnm. Dans ces conditions, le schéma d'accumulation à adopter est :
1111111..., pour la première ligne
1010101..., pour la n ième et dernière ligne.

Ce schéma d'accumulation est fonction de la ligne de pixels considérée. Il peut donc être représenté par une structure de type matricielle et non plus par une seule ligne comme dans le cas du balayage binaire.

Pour les lignes intermédiaires entre la première et la dernière ligne,, des cumuls de type intermédiaire peuvent être adoptés, avec l'introduction régulière et croissante, d'une ligne à la suivante, de cumuls sans décalage, jusqu'à atteindre 50 % des cumuls pour la dernière ligne.

A titre d'exemple, les lignes de cumuls Intermédiaires suivantes peuvent convenir :

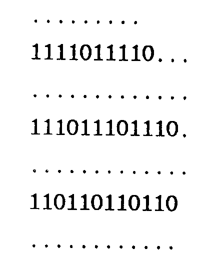

Le détecteur selon l'invention comporte des moyens pour cumuler, avec ou, sans décalage de pixel, les trames de valeurs de luminance successivement lues et des moyens de sélection pour sélectionner, dans le temps, le type des cumuls effectués, c'est-à-dire avec ou sans décalage de pixel, et leur fréquence d'apparition, aux caractéristiques de balayage fournies par le système de balayage du détecteur.

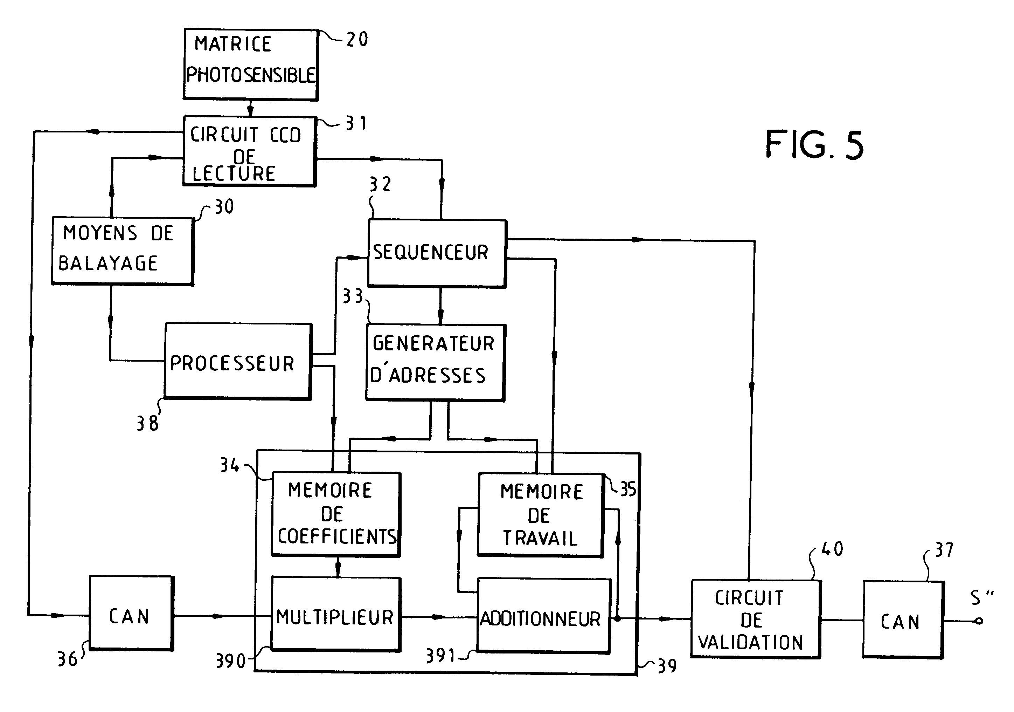

La figure 5 illustre un exemple de réalisation du circuit électronique d'une caméra infrarouge utilisant un détecteur selon l'invention.

Ce circuit comporte une vole principale de transmission du signal utile reliant une des deux sorties d'un circuit CCD de lecture 31 relié à la matrice de cellules photosensibles 20 à l'entrée de signal d'un intégrateur 39 via un convertisseur analogique-numérique CAN, 36 ; l'intégrateur 39, délivre un signal numérique éventuellement validé par un circuit de validation 40 avant conversion par un convertisseur numérique-analogique 37 qui délivre un signal vidéo de sortie "S".

Le circuit de lecture 31 est relié à une sortie de commande des moyens de balayage 30. De plus, un processeur 38 a une entrée de données reliée à une sortie de données des moyens de balayage 30. Ce processeur 38 possède deux sorties reliées respectivement à une entrée d'un séquenceur 32 et à une entrée de commande de l'intégrateur 39.

Une sortie de synchronisation du circuit CCD de lecture 31 est reliée à une deuxième entrée du séquenceur 32 dont une première sortie est reliée à une deuxième entrée de commande de l'intégrateur 39 et dont une deuxième sortie est reliée à l'entrée de commande du circuit de validation 40.

L'intégrateur 39 comporte entre son entrée de signal, reliée à la sortie du convertisseur 36, et sa sortie de signal, un multiplieur 390 et un additionneur 391. Il comporte en outre deux mémoires, une mémoire de coefficients 34 et une mémoire de travail 35, dont les sorties sont couplées respectivement à une seconde entrée du multiplieur 390 et à une seconde entrée de l'additionneur 391, l'additionneur 391, est monté en accumulateur au moyen d'une boucle reliant sa sortie à une entrée de données de la mémoire 35.

Un générateur d'adresses 33 commandé par le séquenceur 32 est relié à des entrées d'adressage des mémoires 34 et 35.

La sortie des moyens de balayage 30 de la caméra reliée à l'entrée de données du processeur 38 lui fournit à chaque instant des informations relatives aux caractéristiques de balayage :
- valeur du rayon moyen de balayage, Rm et vitesse de rotation, dans le cas d'un balayage circulaire ou en spirale,
- la vitesse de balayage linéaire dans le cas d'un balayage linéaire série-parallèle.

A l'aide de ces données, le processeur 38 déduit, d'une part, le nombre de cumuls adapté aux conditions de balayage, ce nombre étant fourni au séquenceur 32 et, d'autre part, sélectionne un schéma d'accumulation sous la forme d'un jeu de coefficients 0 et 1 le plus adapté à ces données parmi différents jeux de coefficients mémorisés dans la mémoire 34 correspondant respectivement à différentes valeurs préétablies de ces données. La sortie principale des moyens de balayage 30 de la caméra commande le circuit de lecture 31 associé à la matrice 20. Ce circuit 31 applique alors des impulsions de synchronisation au séquenceur 32 dont une sortie commande le générateur d'adresses 33 relié aux entrées d'adressage des mémoires 34 et 35 afin d'effectuer la lecture ou l'écriture de ces mémoires de manière synchrone.

Le circuit de lecture 31 fournit un signal analogique à l'entrée du convertisseur CAN 36 qui convertit ce signal en une suite de valeurs numériques codées, par exemple sur 12 bits. Dans l'intégrateur 39, ces valeurs numériques sont multipliées respectivement, grâce au multiplieur 390, par les valeurs des coefficients (0 ou 1) du schéma d'accumulation sélectionné dans la mémoire 34 par le processeur 38, chaque valeur de coefficient étant adressée par le générateur d'adressage 33 ; les produits formés sont ensuite cumulés dans la mémoire de travail 35 par application de ces produits à l'accumulateur formé par l'association de la mémoire 35 et de l'additionneur 391. L'accumulateur somme les produits, successivement fournis par le multiplieur 390, un nombre de fols correspondant au nombre d'intégrations choisi à l'aide du processeur 38 et commandé par le séquenceur 32 via la mémoire 35. Les valeurs cumulées forment, après validation puis conversion par le convertisseur CNA 37, un signal vidéo analogique de sortie S˝. La validation commandée par le séquenceur 32 est effectué par application d'un signal au circuit de validation 40 disposé en amont du convertisseur 37 afin de ne retenir que le nombre de cumuls compatibles avec les données fournies par le système de balayage 30 et traitées par le processeur 38.

En plus de cette utilisation du détecteur en mode balayage, le détecteur selon l'invention peut être utilisé même lorsque la caméra vient à fonctionner en mode non balayé, par exemple lors de la phase de poursuite d'une cible localisée. En effet, dans cette phase, l'axe de visée de la caméra étant asservi pour suivre la cible, le balayage peut être stoppé, de façon à ce que le détecteur occupe une position optimale sur l'image de la scène observée correspondant à la localisation de la cible. L'augmentation de sensibilité est alors avantageusement obtenue en accumulant les valeurs de luminance des mêmes cellules sans décalage. Pour ce faire il suffit de commander le nombre de trames à accumuler et de choisir le schéma d'accumulation sans aucun décalage de pixels pour les lectures de trames successives à cumuler, c'est-à-dire celui ne comportant que des 0. Dans ces conditions, la technique mise en oeuvre est alors équivalente à une post-intégration classique.

## Revendications

**1 -** Détecteur infrarouge à haute sensibilité comportant une matrice de cellules photosensibles élémentaires (20) des moyens de formation d'un signal vidéo à partir d'un multiplexage par un circuit de lecture CCD(31) des signaux de luminance fournis successivement par les cellules, proportionnellement au flux lumineux provenant de chacun des pixels d'une image de la scène observée et reçu par chacune des cellules correspondantes du détecteur, au cours d'un balayage périodique du détecteur sur l'image de la scène commandé par des moyens de balayage (30), et des moyens de conversion (36) du signal vidéo en valeurs de luminances numériques correspondant aux signaux fournis par les cellules photosensibles, le détecteur étant caractérisé en ce qu'il comporte
- des moyens de cumul (39), lors de lectures de trames successives des valeurs de luminance fournies, pour cumuler la valeur de luminance fournie par chacune des cellules du détecteur lors de la lecture d'une trame soit à une valeur de luminance fournie sans décalage par la même cellule soit à celle fournie, avec décalage, par une cellule adjacente couvrant partiellement le même pixel, lors de la lecture de la trame suivante ;
- et des moyens de sélection (38, 32, 33) pour sélectionner au cours du temps et suivant des données relatives aux caractéristiques de balayage du détecteur, le type des cumuls successifs à effectuer, soit avec soit sans décalage de cellule, et le nombre de cumuls sous forme de séquences.

**2 -** Détecteur selon la revendication 1, caractérisé en ce que les moyens de cumul, avec et sans décalage d'un pixel, des valeurs de luminance fournies, après conversion par le convertisseur analogique-numérique (36), par les cellules photosensibles (P₁₁,... Pₙₚ) comportent un intégrateur (39) comprenant un multiplieur (390) couplé à une mémoire de coefficients (34), où sont mémorisés un ensemble de jeux de coefficients à deux valeurs, chaque valeur indiquant l'un des deux types de cumul, avec et sans décalage d'une cellule, et un accumulateur formé d'une mémoire de travail (35) et d'un additionneur (391) couplé à la sortie du multiplexeur (390), et en ce que les moyens de sélection comportent un processeur (38) couplé à la mémoire de coefficients (34) et à un séquenceur (32) lui-même couplé aux mémoires (34, 35) via un générateur d'adresses (33).

**3 -** Détecteur infrarouge selon la revendication 2, caractérisé en ce que les moyens de balayage ( 30), couplés au circuit de lecture (31) de la matrice photosensible (20), ont une sortie de données de balayage reliée au processeur (38) afin de sélectionner, dans la mémoire (34) de l'intégrateur (39), le jeu et la séquence de coefficients d'accumulation correspondant aux données de balayage parmi l'ensemble de jeux de coefficients, la sortie de l'intégrateur (39) étant couplée à un convertisseur numérique-analogique (37) via un circuit de validation (40) pour délivrer les données fournies par l'intégrateur (39) à l'issue de chaque séquence et restituer un signal vidéo analogique de sortie (S˝).

**4 -** Détecteur selon la revendication 3, caractérisé en ce que, les moyens de balayage (30) effectuant un balayage linéaire de type série-parallèle de la matrice (20), les jeux de coefficients d'accumulation mémorisés dans la mémoire (34) sont composés de suites de coefficients 0 et 1, 0 désignant un cumul de valeurs de luminance sans décalage de pixel et 1 un cumul de valeurs avec décalage d'un pixel.

**5 -** Détecteur selon la revendication 3, caractérisé en ce que, les moyens de balayage (30) effectuant un balayage non-linéaire de la matrice (20), les ]eux de coefficients de la mémoire (34) sont composés de matrices de coefficients 0 et 1, 0 caractérisant un cumul de valeurs sans décalage de pixel et 1 un cumul de valeurs avec décalage d'un pixel, chaque ligne de cette matrice correspondant à une ligne de pixels.

**6 -** Détecteur selon la revendication 2, caractérisé en ce que, en mode poursuite, le balayage du détecteur étant stoppé avec un détecteur en position optimale sur l'image de la scène observée, le jeu de coefficients correspondant est composé uniquement de 0, pour commander des cumuls de valeurs de luminance sans décalage.

**7.** Caméra infrarouge utilisant un détecteur selon l'une des revendications précédentes.
